Europäisches Patentamt

European Patent Office

Office européen des brevets

(19)

(11)  EP 0 891 298 B1

(12)  FASCICULE DE BREVET EUROPEEN

(45) Date de publication et mention
de la délivrance du brevet:
**03.05.2000 Bulletin 2000/18**

(51) Int Cl.[7]: **C01F 7/06**, C01D 1/28,
C01D 1/04

(21) Numéro de dépôt: **97915545.4**

(22) Date de dépôt: **24.03.1997**

(86) Numéro de dépôt international:
**PCT/FR97/00513**

(87) Numéro de publication internationale:
**WO 97/36823 (09.10.1997 Gazette 1997/43)**

(54) **PROCEDE DE RECUPERATION DU SODIUM CONTENU DANS LES RESIDUS ALCALINS INDUSTRIELS**

VERFAHREN ZUR RÜCKGEWINNUNG VON NATRIUM DAS IN INDUSTRIELLEN ALKALIABFÄLLEN ENTHALTEN IST

METHOD FOR RECOVERING SODIUM FROM ALKALINE INDUSTRIAL WASTE

(84) Etats contractants désignés:
**DE ES FR GR IE IT**

(30) Priorité: **01.04.1996 FR 9604288**

(43) Date de publication de la demande:
**20.01.1999 Bulletin 1999/03**

(73) Titulaire: **ALUMINIUM PECHINEY**
**75218 Paris Cedex 16 (FR)**

(72) Inventeur: **LAMERANT, Jean-Michel**
**F-13320 Bouc-Bel-Air (FR)**

(74) Mandataire: **Mougeot, Jean-Claude et al**
**PECHINEY**
**Immeuble "SIS"**
**217 ,cours Lafayette**
**69451 Lyon Cedex 06 (FR)**

(56) Documents cités:
**EP-A- 0 253 635          WO-A-94/02417**
**CA-A- 1 108 319**

• **DATABASE WPI Week 8243 Derwent**
**Publications Ltd., London, GB; AN 91156**
**XP002019139 & JP 57 149 805 A (SHOWA**
**KEIKINZOKU KK) , 16 Septembre 1982**

EP 0 891 298 B1

## EP 0 891 298 B1

**Description**

## DOMAINE TECHNIQUE

L'invention concerne un procédé de récupération à l'aide d'une résine échangeuse d'ions, du sodium contenu dans les résidus alcalins industriels et plus particulièrement dans les « boues rouges » et les effluents sodiques issus de la fabrication d'hydrate d'alumine selon le procédé Bayer.

## ETAT DE LA TECHNIQUE

Le procédé Bayer largement décrit dans la littérature scientifique spécialisée constitue la méthode essentielle de production d'alumine destinée à être transformée en aluminium métal par électrolyse ignée ou à être utilisée telle quelle comme alumine technique.

Selon ce procédé, le minerai de bauxite est attaqué à chaud au moyen d'une solution aqueuse d'hydroxyde de sodium (ou soude) concentrée, appelée encore liqueur d'attaque, pour solubiliser l'hydrate d'alumine de la bauxite. La solution sursaturée d'aluminate de sodium résultant de cette attaque est ensuite séparée de la phase solide constituée par le résidu inattaqué du minerai riche en oxydes de fer appelé « boues rouges ». La solution sursaturée d'aluminate de sodium est ensuite décomposée, c'est-à-dire désaturée par précipitation d'hydrate d'alumine en présence d'amorce avant d'être rechargée en soude et recyclée comme liqueur d'attaque du minerai de bauxite. Quant aux boues rouges après plusieurs lavages par décantation pour récupérer la liqueur d'aluminate de sodium imprégnant ces boues, elles sont généralement mises en décharge car les possibilités de valorisation de ce sous-produit demeurent limitées.

Les boues rouges sont principalement constituées d'oxydes et d'hydroxydes de fer, de titane et d'alumine combinés à de la silice sous forme de silico-aluminates complexes préexistants dans le minerai, mais également de produits insolubles, comme des composés de la famille de l'hydroxysodalite de formule générale $Na_2O$, $Al_2O_3$, $2SiO_2$, $1/3(Na_2,Ca)X$, $mH_2O$ où X peut être l'anion $2Cl^-$, $2OH^-$, $SO_{4--}$ ou $CO_{3--}$, qui se forment lors de l'attaque sodique par combinaison de la soude libre avec la silice et l'alumine, appelés également produits de dessilicatation. La soude ainsi combinée, représentant au moins 90% de la soude totale fixée dans les boues rouges, n'est évidemment pas récupérable par lavage à l'eau. De plus la quantité de soude combinée, donc perdue par entraînement dans les boues, est d'autant plus importante que la teneur en silice de la bauxite est élevée.

A titre indicatif, la teneur pondérale des principaux constituants des boues séchées peut varier dans les proportions suivantes :

| | |
|---|---|
| $Al_2O_3$ | 40 à 20% |
| $SiO_2$ | 5 à 20% |
| $Fe_2O_3$ | 30 à 60% |
| $TiO_2$ | 5 à 10% |
| CaO | 1 à 4% |
| $Na_2O$ | 4 à 12% |
| Perte au feu et divers : complément à 100%. | |

Il est donc fréquent lors de l'attaque alcaline des bauxites dont la teneur pondérale en silice est supérieure ou égale à 5 % d'enregistrer des pertes en soude par entraînement dans les boues rouges de l'ordre de 100 Kg de $Na_2O$ par tonne d'alumine produite. Cette soude piégée sous forme de silico-aluminate de sodium peut représenter 10% voire 12% en poids de $Na_2O$ dans les boues rouges séchées.

De nombreux procédés ont été proposés pour réduire les pertes en soude dans les boues rouges. On connaît notamment les procédés par voie acide consistant à attaquer les boues rouges lavées et remises en suspension dans l'eau par un composé de soufre tel que $SO_2$, $H_2SO_4$ ou par de l'acide carbonique permettant de solubiliser le sodium combiné tout en conservant la silice à l'état de résidu solide.

Ainsi FR 2372238 (US 4119698) réalise une attaque sulfurique des boues rouges à haute température (250 à 300°C) pour dissoudre la plupart des constituants métalliques, aluminium, fer, titane, sodium et calcium sous forme de sulfates qui sont séparés de la silice par filtration. On élimine ensuite sélectivement le titane, le fer et l'aluminium pour ne conserver en solution que le sulfate de sodium. Compte tenu des conditions d'attaque particulièrement sévères et par suite difficiles à réaliser, ainsi que des nombreuses opérations de séparation liquide/solide, ce procédé s'avère très coûteux à mettre en oeuvre et de surcroît il ne permet pas de valoriser le sodium récupéré sous une forme directement recyclable dans le circuit principal du procédé Bayer.

FR 2576149 (US 4668485) réalise une attaque sélective du sodium combiné dans les boues rouges par

barbotage de $SO_2$ dans une suspension aqueuse des boues à moins de 100°C. Le sodium et une partie de l'aluminium passent en solution sous forme de sulfite. Par caustification à la chaux on précipite l'anion sulfite sous forme de sulfite de calcium et l'on conserve en solution le sodium et l'aluminium sous forme d'aluminate de sodium réutilisable directement dans le circuit Bayer. Si ce procédé permet de mieux valoriser le sodium extrait des boues rouges, il reste également très délicat à mettre en oeuvre en raison des problèmes posés par la séparation de la silice qui dans les conditions d'attaque par $SO_2$ à basse température peut en partie passer à l'état colloïdal, ainsi que par le retraitement du bisulfite de calcium, sous-produit de la caustification.

On connaît également des procédés de traitement basique des boues rouges consistant en une caustification directe des boues par la chaux. Dans certaines conditions de température et de concentration en chaux, il est possible de substituer du calcium au sodium dans les produits de dessilicatation.

C'est ce que réalise US 4486393 en mettant en suspension les boues dans leur dernière eau de lavage contenant encore de la soude libre à une température voisine de 100°C et au contact d'une quantité suffisante de chaux destinée d'une part à se substituer au sodium combiné des produits de dessilicatation et libérer de la soude mais également à extraire une partie de l'alumine combinée de ces produits de dessilicatation. Ce procédé simple à mettre en oeuvre ne permet toutefois que d'extraire 30 à 40% de la soude combinée. En effectuant ces mêmes opérations à bien plus haute température (300°C environ) US 4483830 récupère plus de 90% du sodium combiné dans les boues rouges avec en contrepartie l'inconvénient de devoir mettre en oeuvre des moyens de traitement très coûteux en termes d'investissement mais aussi de coût d'exploitation, s'agissant notamment de batteries d'autoclaves à haute pression.

WO-A-94/02417 réalise une mise en contact de résidus alcalins industriels (par exemple les boues rouges) avec une résine échangeurs d'ions dans le but de séparer les ions sodium.

## PROBLEME POSE

La mise au point d'un procédé de récupération du sodium entraîné dans les résidus alcalins industriels, et notamment dans les boues rouges avant rejet, assurant un rendement d'extraction du sodium combiné de l'ordre de 90%, cela au moindre coût et sous forme d'un produit directement valorisable, reste un objectif à atteindre pour l'homme du métier.

## OBJET DE L'INVENTION

C'est le problème que résout le procédé selon l'invention qui repose sur le double constat suivant :

- une résine cationique par nature insoluble, du type $RH^+$ et d'acidité moyenne (définie par sa constante pka) au contact direct de résidus alcalins généralement sous forme solide comme les boues rouges, fixe quantitativement le sodium combiné,
- le sodium une fois fixé sur ladite résine peut être à son tour libéré sous forme de solution concentrée de soude au contact d'un autre solide, la chaux, et cela de façon quantitative.

Plus précisément l'invention concerne un procédé de récupération du sodium contenu dans les résidus alcalins industriels, notamment les boues rouges et les effluents sodiques concentrés issus de la fabrication d'hydrate d'alumine selon le procédé Bayer, comportant la séquence opératoire suivante :

①on sélectionne une résine échangeuse d'ions cationiques de type $RH^+$,

②on met en contact directement cette résine avec les résidus alcalins en quantité suffisante pour fixer tout le sodium contenu dans lesdits résidus formant une suspension aqueuse homogène et à température appropriée,

③après un temps de contact suffisant pour assurer le transfert et la fixation du sodium sur la résine, on sépare la résine chargée en sodium des résidus alcalins désodés qui peuvent être alors mis en décharge,

④caractérisé en ce qu'on met alors en contact la résine chargée en sodium avec de la chaux de préférence à l'état de lait de chaux pour former une suspension de résine et de chaux dans l'eau,

⑤après un temps de contact suffisant à température appropriée, on sépare la solution concentrée en soude immédiatement valorisable, de la résine chargée en calcium,

⑥on régénère la résine cationique $RH^+$ pour réutilisation en tête de procédé par élution du calcium à l'aide d'un acide minéral dilué pour former un sel de calcium neutralisé qui peut être facilement éliminé.

La neutralisation avant rejet d'effluents alcalins, voire la simple déminéralisation de l'eau au contact d'un échangeur d'ions pour en extraire notamment le sodium en solution, sont des applications bien connues des résines cationiques acides. Le sodium fixé est ensuite élué par un acide fort qui régénère la résine cationique et forme une solution d'un sel de sodium récupérable par cristallisation.

En revanche l'extraction par une résine du sodium des résidus alcalins industriels. généralement à l'état solide comme les boues rouges, constitue un résultat tout à fait surprenant si l'on considère qu'au moins 90% du sodium est insoluble, étant combiné sous forme de silico-aluminate de sodium complexe tel que l'hydroxysodalite.

Le procédé fait réagir directement la résine avec le résidu alcalin, en l'occurrence les boues rouges, en suspension dans l'eau à une température d'au moins 60°C et de préférence comprise entre 75°C et 95°C pendant 30 min à 2 heures avec agitation. La résine cationique utilisée, repérée RH$^+$, se caractérise par son acidité mesurée par la valeur de la constante pka de l'acide greffé sur la matrice insoluble.

Cette résine peut être une résine sulfonique R-SO$_3$H fortement acide (pka#0), une résine méthacrylique R-CH=CR-COOH de faible acidité (pka#6), mais on utilise de préférence une résine présentant une acidité modérée (pka compris entre 2 et 5) telle qu'une résine carboxylique R-COOH (pka#4,5) assurant la fixation quantitative du sodium en substitution au cation H$^+$ pourtant fortement lié, mais aussi une régénération complète par élution du cation fixé par un acide minéral fort, généralement HCl.

Bien que ces résines soient par nature insolubles, elles se sont avérées capables d'attaquer le résidu solide comme les boues rouges pour en extraire le sodium. Après séparation par simple tamisage des grains de résine du résidu solide désodé, le sodium fixé sur la résine est remis en solution à l'état de NaOH par mise en contact de ladite résine avec un autre solide en suspension, la chaux Ca(OH)$_2$ de préférence sous forme de lait de chaux. Le cation Ca$^{++}$ se substitue alors à 2 cations Na$^+$ selon la réaction :

$$2 \text{ R Na+ } + \text{ Ca(OH)}_2 \rightarrow 2 \text{ R Ca}^{++} + 2 \text{ NaOH}$$

Comme pour l'attaque du sodium des boues rouges, de façon tout à fait surprenante une réaction d'échange cationique se produit entre solides et cela quantitativement.

En pratique, on fait réagir la quantité de chaux stoechiométrique majorée de 5 à 10% en poids. On obtient ainsi une solution de soude pure relativement concentrée (25 à 40 g NaOH/litre) directement réutilisable dans une chaîne Bayer.

A noter que les ions calcium Ca$^{++}$ doublement chargés se fixent plus facilement sur la résine que les ions sodium monovalents de sorte qu'en formant une suspension homogène de résine chargée en sodium et de lait de chaux maintenue en agitation pendant 1 à 3 heures à une température supérieure à 30°C et de préférence comprise entre 50 et 90°C, la quasi totalité du sodium fixé sur la résine passe en solution sous forme de NaOH.

La résine chargée en calcium sous la forme R Ca$^{++}$ est ensuite séparée par tamisage de la solution sodique pour être régénérée par élution du calcium par une solution diluée d'acide fort à pH < 3. L'élution du calcium par HCl en particulier permet de recueillir une solution assez concentrée de chlorure de calcium (CaCl$_2$) facilement transformable en CaSO$_4$, très peu soluble, en présence de H$_2$SO$_4$ et permettant le recyclage d'HCl comme acide d'élution permanent ainsi que la mise en décharge de CaSO$_4$.

On peut utiliser aussi avantageusement comme acide de régénération un acide fort dilué mais impur provenant par exemple d'effluents résiduaires acides de l'industrie chimique. La sélectivité de la résine vis à vis des cations permet en effet de neutraliser ces effluents avant rejet sans risque de pollution de la résine par entraînement d'anions et donc en garantissant une bonne réactivité de cette résine même après de nombreux cycles de régénération.

On obtient donc non seulement un excellent taux d'extraction du sodium, mais aussi sa restitution sous forme de solution de soude de grande pureté.

On notera aussi la très grande facilité à mettre en oeuvre ce procédé de récupération du sodium nécessitant peu d'investissement et d'un coût d'exploitation peu élevé.

Outre les faibles besoins en énergie et la séparation très aisée de la résine d'avec les solides en suspension (résidus insolubles, boues rouges, chaux) par simple tamisage sans encrassement de la matière du polymère, il faut remarquer que les réactions de substitution des cations H$^+$ par Na$^+$, puis 2 Na$^+$ par Ca$^{++}$ et enfin Ca$^{++}$ par 2 H$^+$ étant quantitatives, il n'est pas nécessaire d'opérer en colonne pour obtenir d'excellents rendements d'extraction du sodium (de l'ordre de 90% du sodium combiné). La conduite des opérations « en batch » simple et peu coûteuse est tout à fait applicable.

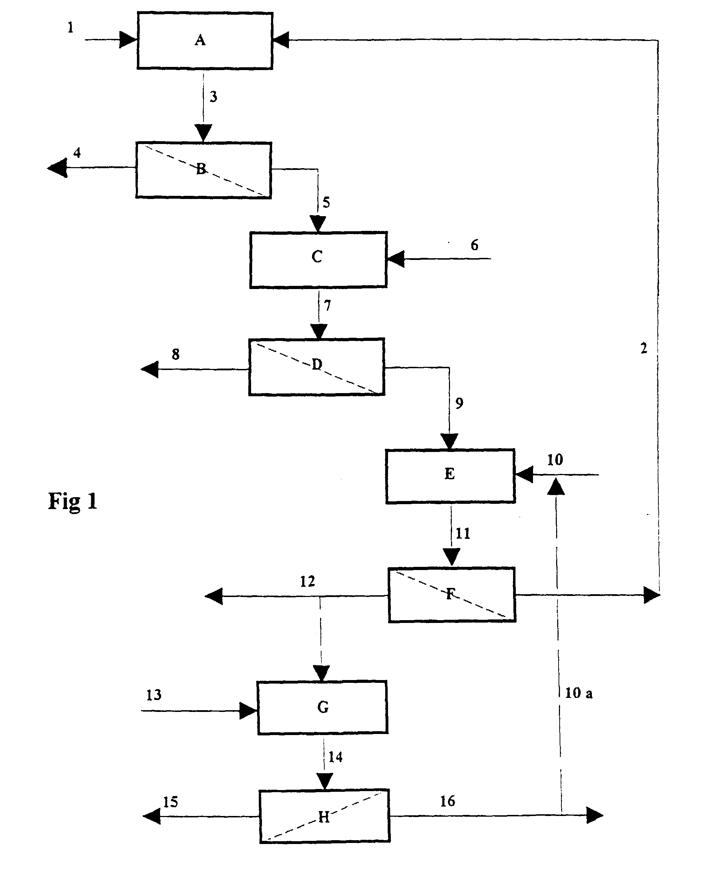

La mise en oeuvre du procédé selon l'invention sera mieux comprise par la description détaillée ci-après s'appuyant sur la figure 1 qui est une représentation schématique du processus opératoire.

## MISE EN OEUVRE DU PROCEDE

Une bauxite australienne de WEIPA contenant en poids sur sec $Al_2O_3$ % 54,22, $Fe_2O_3$ % 12,01, $TiO_2$ % 2,83, $Na_2O$ % 0,16, perte au feu et divers 25,18% et surtout $SiO_2$ % 5,6, est broyée tout passant à 315 μ puis, après addition d'un peu de chaux, est attaquée à 255°C pendant 8 minutes par mise en suspension dans une liqueur décomposée d'aluminate de sodium issue du procédé Bayer, caractérisée par le rapport RP de concentration en g/litre d'$Al_2O_3$ en solution à la concentration en soude en g/litre de $Na_2O$ généralement compris entre 0,5 et 0,8 ainsi que par la concentration en soude généralement supérieure à 160 g $Na_2O$/litre.

Après refroidissement, on sépare par décantation puis filtration la liqueur sursaturée d'aluminate de sodium, destinée à être décomposée, des résidus solides inattaqués ou boues rouges qui sont lavées à l'eau par remise en suspension et décantation jusqu'à ce que la teneur en soude des eaux de lavage soit inférieure à 1g $Na_2O$/litre. Sur les boues industrielles lavées dont la composition moyenne sur sec est alors :

| $Al_2O_3$ % 17,12 | $SiO_2$ % 16,71 | $Na_2O$ % 9,87 dont au moins les 9/10 sont combinés |
|---|---|---|
| $Fe_2O_3$ % 34,53 | $TiO_2$ % 8,78 | CaO % 2,38 |
| Perte au feu et divers % 10,61, | | |

on prélève un lot de 14 kg de boues imprégnées 1 correspondant à 7,4 kg de solide sec que l'on mélange dans un réacteur agité à 85°C pendant 1 heure avec 12,1 kg d'une résine 2 carboxylique, IMAC HP 336® de type RH$^+$ sachant que 1 kg de ladite résine peut dans les meilleures conditions fixer 60 à 70 g de sodium exprimé en $Na_2O$.

A l'issue de ce traitement, on tamise B, à 0,5 mm, le mélange 3 pour séparer la résine 5 chargée en sodium des boues désodées 4 qui peuvent être mises en décharge. L'analyse des boues ainsi traitées est alors la suivante (sur sec) :

| $Al_2O_3$ % 17,59 | $SiO_2$ % 17,7 | $Na_2O$ % 1,01 |
|---|---|---|
| $Fe_2O_3$ % 35,72 | $TiO_2$ % 8,9 8 | CaO % 2,44 |
| Perte au feu et divers % 16,56. | | |

On constate ainsi que 90,1 % du $Na_2O$ a été extrait des boues après attaque, grâce à ce traitement.

La résine chargée en sodium 5 est ensuite mélangée C avec du lait de chaux 6 (dont la totalité des grains en suspension a une taille inférieure à 100 micromètres) à 60°C pour former par agitation une suspension homogène dont la concentration en soude dans la liqueur croît régulièrement pour se stabiliser au bout de 2 heures à 36 g NaOH/litre correspondant au remplacement sur la résine de la totalité du sodium fixé par l'ion calcium. On procède alors, par tamisage D de la suspension 7, à la séparation de la résine 9 chargée en calcium de la liqueur sodique concentrée 8 ($Na_2O$ environ 28 g/litre) directement recyclable dans la chaîne Bayer.

La résine 9 chargée en calcium est enfin mélangée à froid avec une solution d'acide chlorhydrique 10 impur contenant des sels métalliques tels que des sels de fer ($Fe^{++}$ et $Fe^{+++}$), d'aluminium, de zinc et de chrome. On constate un enrichissement progressif de la teneur en calcium de la solution d'acide chlorhydrique impur dont le pH se stabilise au bout d'une heure au voisinage de 3.

Par tamisage F on sépare la résine régénérée 2 sous forme RH$^+$ qui après un lavage de sécurité à l'eau déminéralisée est recyclée en tête de procédé. On remarque que la totalité des sels métalliques présents dans la solution acide d'élution 10 se retrouvent intégralement dans la solution éluée à base de chlorure de calcium 12 sans avoir aucunement diminué la capacité de régénération de la résine qui ne fixe aucun anion d'impuretés, confirmant ainsi son excellente sélectivité cationique. Cette caractéristique est particulièrement mise en évidence dans le traitement d'effluents sodiques concentrés issus de la fabrication d'hydrate d'alumine selon le procédé Bayer faisant l'objet d'un autre exemple de mise en oeuvre du procédé de l'invention qui sera décrit plus loin.

A noter enfin dans une variante de mise en oeuvre du procédé de l'invention qu'il est possible d'éviter le rejet, en tant qu'effluent, de la solution éluée neutralisée à base de chlorure de calcium 12, par précipitation G au contact d'une solution diluée d'acide sulfurique impur 13 (acide sulfurique de décapage par exemple) et à une température d'environ 60°C, de sulfate de calcium sous forme d'une suspension 14 qui, après filtration H, permet d'isoler le résidu inerte de sulfate de calcium insoluble que l'on peut mettre en décharge 15 et un filtrat acide 16 contenant de l'acide chlorhydrique impur (produit de la réaction) réutilisable partiellement ou en totalité 10a pour la régénération de la résine sous forme RH$^+$.

**AUTRE EXEMPLE DE MISE EN OEUVRE**

Cette application concerne l'extraction du sodium des effluents sodiques issus de la fabrication d'hydrate d'alumine selon le procédé Bayer. Dans ce cas le résidu alcalin industriel n'est plus constitué par un solide comme les boues rouges mais par un effluent sodique contenant environ 30 g $Na_2O$/litre chargé en impuretés telles que humates, carbonate, sulfate, oxalate de sodium et provenant par exemple des eaux de lavage du trihydrate d'alumine précipité dans le circuit Bayer ou des boues rouges. Dans le cas présent, il suffit de remplacer dans l'exemple précédent le prélèvement 1 de 14 kg de boues imprégnées représentant 7,4 kg de solide sec contenant environ 10% en poids de $Na_2O$ par le prélèvement de 25 litres de liqueur sodique à 30 g $Na_2O$/litre, en suivant ensuite le même mode opératoire. On note à l'étape A de mise en contact avec la résine carboxylique 2 qu'il suffit de 30 min pour que la résine fixe la totalité du sodium contenu dans la liqueur principalement sous forme de NaOH alors que les divers anions d'impuretés notamment humates, sulfate, carbonate, oxalate de sodium ne sont pas fixés. Ils sont rejetés alors sous forme d'une liqueur désodée et non plus d'une boue désodée 4. Par ce moyen, il est donc possible de purger les circuits Bayer de leurs impuretés, notamment des humates et des carbonate et oxalate de sodium, sans perdre de soude caustique.

**INTERET DU PROCEDE**

Si l'objectif principal du procédé selon l'invention de récupérer au moins 90 % du sodium entraîné dans les résidus alcalins industriels au moindre coût et sous une forme très valorisable comme une solution concentrée de soude pure est bien atteint, le procédé offre d'autres possibilités intéressantes en autorisant par exemple la mise en oeuvre d'acides résiduaires comme matières auxiliaires pour la régénération de la résine tout en assurant leur neutralisation, évitant par le fait une opération spécifique de neutralisation avant rejet.

**Revendications**

1.   Procédé de récupération du sodium contenu dans les résidus alcalins industriels, notamment les boues rouges et les effluents sodiques concentrés issus de la fabrication d'hydrate d'alumine selon le procédé Bayer, comportant la séquence opératoire préalable suivante :

   -   on sélectionne une résine échangeuse d'ions cationique de type $RH^+$,
   -   on met en contact directement cette résine avec les résidus alcalins en quantité suffisante pour fixer tout le sodium contenu dans lesdits résidus formant une suspension aqueuse homogène et à température appropriée,
   -   après un temps de contact suffisant pour assurer le transfert et la fixation du sodium sur la résine, on sépare la résine chargée en sodium des résidus alcalins désodés qui peuvent être alors mis en décharge,
   -   caractérisé en ce qu'on met alors en contact la résine chargée en sodium avec de la chaux de préférence à l'état de lait de chaux pour former une suspension de résine et de chaux dans l'eau,
   -   après un temps de contact suffisant à température appropriée on sépare la solution concentrée en soude immédiatement valorisable, de la résine chargée en calcium,
   -   on régénère la résine cationique $RH^+$ pour réutilisation en tête de procédé par élution du calcium à l'aide d'un acide minéral dilué pour former un sel de calcium neutralisé qui peut être facilement éliminé.

2.   Procédé selon la revendication 1 caractérisé en ce que la résine cationique de type $RH^+$ est une résine carboxylique.

3.   Procédé selon la revendication 1 ou 2 caractérisé en ce que la température de mise en contact de la résine avec le résidu alcalin, tel que les boues rouges en suspension dans l'eau, est d'au moins 60°C et de préférence comprise entre 75°C et 95°C.

4.   Procédé selon l'une quelconque des revendications 1 à 3 caractérisé en ce que le temps de mise en contact de la résine avec le résidu alcalin, tel que les boues rouges en suspension dans l'eau, est compris entre 30 min et 2 heures.

5.   Procédé selon l'une quelconque des revendications 1 à 4 caractérisé en ce que l'on sépare par tamisage la résine de la suspension contenant le résidu alcalin désodé.

6.   Procédé selon l'une quelconque des revendications 1 à 5 caractérisé en ce que la quantité de chaux mise en contact avec la résine pour se substituer au sodium est la quantité stoechiométrique majorée de 5 à 10%.

**7.** Procédé selon l'une quelconque des revendications 1 à 6 caractérisé en ce que la température de mise en contact de la résine chargée en sodium avec le lait de chaux est supérieure à 30°C et de préférence comprise entre 50 et 90°C.

**8.** Procédé selon l'une quelconque des revendications 1 à 7 caractérisé en ce que le temps de mise en contact de la résine chargée en sodium avec le lait de chaux maintenu en agitation est compris entre 1 heure et 3 heures.

**9.** Procédé selon l'une quelconque des revendications 1 à 8 caractérisé en ce que la résine chargée en calcium est séparée par tamisage de la solution concentrée en soude.

**10.** Procédé selon l'une quelconque des revendications 1 à 9 caractérisé en ce que la résine chargée en calcium est régénérée après élution à froid du calcium par une solution diluée d'acide chlorhydrique à pH < 3.

**11.** Procédé selon la revendication 10 caractérisé en ce que l'acide chlorhydrique d'élution est une solution d'HCl impur contenant des sels métalliques.

**12.** Procédé selon l'une quelconque des revendications 1 à 11 caractérisé en ce que la résine régénérée sous forme RH$^+$ est séparée par tamisage de la solution éluée neutralisée à base de chlorure de calcium.

**13.** Procédé selon la revendication 12 caractérisé en ce que la solution éluée neutralisée à base de chlorure de calcium est mise en contact avec une solution diluée d'acide sulfurique pour précipiter le calcium sous forme de sulfate de calcium insoluble qui, après filtration, peut être mis en décharge, alors que le filtrat contenant de l'acide chlorhydrique, produit de la réaction, est réutilisé partiellement ou en totalité pour la régénération de la résine RH$^+$.

**14.** Procédé selon la revendication 1 caractérisé en ce que le résidu alcalin industriel est un effluent sodique contenant jusqu'à environ 30 g Na$_2$O/litre et des impuretés telles que humates, carbonate, sulfate, oxalate de sodium.

**Patentansprüche**

**1.** Verfahren zur Rückgewinnung des in industriellen Alkaliabfällen, insbesondere in Rotschlamm und konzentrierten Natriumabfällen aus der Herstellung von Tonerdehydrat nach dem Bayer-Verfahren enthaltenen Natriums, mit folgenden Arbeitsgängen :

- man wählt ein kationisches Ionenaustauschharz des Typs RH$^+$,
- man versetzt dieses Harz in direkten Kontakt mit den Alkaliabfällen in ausreichender Menge, um das gesamte, in den besagten Abfällen enthaltene Natrium zu fixieren, durch Bildung einer homogenen wässrigen Suspension bei geeigneter Temperatur,
- nach einer ausreichenden Kontaktzeit, um den Transfer und die Fixierung des Natriums auf dem Harz zu gewährleisten, trennt man das mit Natrium angereicherte Harz von den Alkaliabfällen, die dann auf die Müllhalde entsorgt werden können,
- dadurch gekennzeichnet, dass man dann das mit Natrium angereicherte Harz mit Kalk, vorzugsweise im Kalkmilch-Zustand, in Kontakt versetzt, um eine Harz- und Kalksuspension im Wasser zu bilden,
- dass man nach einer ausreichenden Kontaktzeit bei geeigneter Temperatur die sofort verwertbare konzentrierte Ätznatronlösung vom mit Kalzium angereicherten Harz trennt,
- dass man das kationische Harz RH+ für die Wiederverwendung am Beginn des Verfahrens regeneriert, und zwar durch Eluierung des Kalziums mit einer verdünnten Mineralsäure, um ein neutralisiertes Kalziumsalz zu bilden, das leicht entsorgt werden kann.

**2.** Verfahren nach Anspruch 1, dadurch gekennzeichnet, dass das kationische Harz des Typs RH+ ein Carboxylharz ist.

**3.** Verfahren nach Anspruch 1 oder 2, dadurch gekennzeichnet, dass die Kontakttemperatur des Harzes mit dem Alkaliabfall wie Rotschlamm in Suspension in Wasser mindestens 60°C und vorzugsweise zwischen 75°C und 95°C beträgt.

**4.** Verfahren nach einem der Ansprüche 1 bis 3, dadurch gekennzeichnet, dass die Kontaktzeit des Harzes mit dem Alkaliabfall wie Rotschlamm in Suspension in Wasser zwischen 30 Minuten und 2 Stunden beträgt.

5. Verfahren nach einem der Ansprüche 1 bis 4, dadurch gekennzeichnet, dass man das Harz von der den natriumfreien Alkaliabfall enthaltenden Lösung durch Sieben trennt.

6. Verfahren nach einem der Ansprüche 1 bis 5, dadurch gekennzeichnet, dass die mit dem Harz in Kontakt versetzte Kalkmenge, um das Natrium zu ersetzen, die stöchiometrische Menge erhöht um 5 bis 10% ist.

7. Verfahren nach einem der Ansprüche 1 bis 6, dadurch gekennzeichnet, dass die Kontakttemperatur des mit Natrium angereicherten Harzes mit der Kalkmilch über 30°C beträgt, und vorzugsweise zwischen 50 und 90°C.

8. Verfahren nach einem der Ansprüche 1 bis 7, dadurch gekennzeichnet, dass die Kontaktzeit des mit Natrium angereicherten Harzes mit der umgerührten Kalkmilch zwischen 1 Stunde und 3 Stunden beträgt.

9. Verfahren nach einem der Ansprüche 1 bis 8, dadurch gekennzeichnet, dass das mit Kalzium angereicherte Harz durch Sieben von der mit Ätznatron konzentrierten Lösung getrennt wird.

10. Verfahren nach einem der Ansprüche 1 bis 9, dadurch gekennzeichnet, dass das mit Kalzium angereicherte Harz nach Kalteluierung des Kalziums mit einer verdünnten Salzsäurelösung mit einem pH < 3 regeneriert wird.

11. Verfahren nach Anspruch 10, dadurch gekennzeichnet, dass die Eluierungs-Salzsäure eine unreine HCl-Lösung ist, die Metallsalze enthält.

12. Verfahren nach einem der Ansprüche 1 bis 11, dadurch gekennzeichnet, dass das in Form von RH+ regenerierte Harz durch Sieben von der eluierten, neutralisierten Lösung auf Basis von Kalziumchlorid getrennt wird.

13. Verfahren nach Anspruch 12, dadurch gekennzeichnet, dass die eluierte, neutralisierte Lösung auf Basis von Kalziumchlorid mit einer verdünnten Schwefelsäure in Kontakt versetzt wird, um das Kalzium in Form von unlöslichem Kalziumsulfat zu fällen, das nach Filterung auf die Müllhalde entsorgt werden kann, während das die Salzsäure enthaltende Filtrat, Produkt der Reaktion, ganz oder teilweise für die Regenerierung des Harzes RH$^+$ wiederverwendet wird.

14. Verfahren nach Anspruch 1, dadurch gekennzeichnet, dass der industrielle Alkaliabfall ein Natriumabfall ist, der etwa 30 g Na$_2$O/Liter und Unreinheiten wie Humate, Karbonate, Sulfate, Natriumoxalate enthält.

## Claims

1. Method for recovering sodium from alkaline industrial waste, in particular from red mud and concentrated sodium waste derived from the production of alumina hydrate using the Bayer process, comprising the following prior operating sequence :

   - a cationic ion exchange resin of RH$^+$ type is chosen,

   - this resin is placed directly in contact with the alkaline waste in sufficient quantity to fix all the sodium contained in said waste forming a homogeneous aqueous suspension, and at suitable temperature,

   - after sufficient contact time to ensure the transfer and fixation of the sodium onto the resin, the sodium-containing resin is separated from the sodium-free alkaline waste which can then be disposed as waste,

   - characterised in that the sodium-containing resin is then placed in contact with lime, preferably milk of lime, to form a suspension of resin and lime in water,

   - after sufficient contact time at suitable temperature, the concentrated sodium hydroxide solution that can be immediately re-used is separated from the calcium-containing resin,

   - the RH$^+$ cationic resin is regenerated for reuse at the head of the process by elution of the calcium using a dilute mineral acid to form a neutralised calcium salt which can be easily removed.

2. Method according to claim 1, characterised in that the cationic resin of RH$^+$ type is a carboxylic resin.

3. Method according to claim 1 or 2, characterised in that the contact temperature of the resin with the alkaline waste, such as red mud in suspension in water, is at least 60°C, preferably between 75°C and 95°C.

4. Method according to any of claims 1 to 3, characterised in that the contact time of the resin with the alkaline waste, such as red mud in suspension in water, is between 30 min and 2 hours.

5. Method according to any of claims 1 to 4, characterised in that the resin is separated by screening from the suspension containing the sodium-free alkaline waste.

6. Method according to any of claims 1 to 5, characterised in that the quantity of lime placed in contact with the resin to substitute for the sodium is the stoicheiometric quantity increased by 5 to 10 %.

7. Method according to any of claims 1 to 6, characterised in that the contact temperature of the sodium-containing resin with the milk of lime is greater than 30°C, preferably between 50 and 90°C.

8. Method according to any of claims 1 to 7, characterised in that the contact time of the sodium-containing resin with the milk of lime maintained under shaking is in the range of 1 hour to 3 hours.

9. Method according to any of claims 1 to 8, characterised in that the calcium-containing resin is separated by screening from the concentrated sodium hydroxide solution.

10. Method according to any of claims 1 to 9, characterised in that the calcium-containing resin is regenerated after cold elution of the calcium with a dilute solution of hydrochloric acid whose pH is < 3.

11. Method according to claim 10, characterised in that the elution hydrochloric acid is an impure HCl solution containing metal salts.

12. Method according to any of claims 1 to 11, characterised in that the regenerated resin in $RH^+$ form is separated by screening from the eluted, neutralised solution containing calcium chloride.

13. Method according to claim 12, characterised in that the eluted neutralised solution containing calcium chloride is placed in contact with a dilute solution of sulphuric acid to precipitate the calcium in the form of insoluble calcium sulphate which, after filtration, can be discarded as waste, whereas the filtrate containing hydrochloric acid, a reaction product, is re-used partly or in full for regeneration of the $RH^+$ resin.

14. Method according to claim 1, characterised in that the alkaline industrial waste is sodium waste containing up to approximately 30 g $Na_2O$/litre and impurities such as humates and sodium carbonate, sulphate or oxalate.

**Fig 1**